Europäisches Patentamt

European Patent Office

Office européen des brevets

(11) Veröffentlichungsnummer: **0 472 943 A2**

## (12) EUROPÄISCHE PATENTANMELDUNG

(21) Anmeldenummer: **91112923.7**

(22) Anmeldetag: **01.08.91**

(51) Int. Cl.5: **B32B 31/18**

(30) Priorität: **30.08.90 DE 4027431**

(43) Veröffentlichungstag der Anmeldung:
**04.03.92 Patentblatt 92/10**

(84) Benannte Vertragsstaaten:
**DE ES GB IT**

(71) Anmelder: **Billhöfer Maschinenfabrik GmbH
Gutenstetter Strasse 20
W-8500 Nürnberg(DE)**

(72) Erfinder: **Distler,Jochen
Pettensiedel 44
W-8551 Igensdorf(DE)**
Erfinder: **Huprich,Hans
Carl-Orff-Ring 30
W-8501 Wendelstein(DE)**

(74) Vertreter: **Patentanwälte Czowalla . Matschkur
& Partner
Dr.-Kurt-Schumacher-Strasse 23
W-8500 Nürnberg 1(DE)**

(54) **Trennvorrichtung für Bogenkaschiermaschine.**

(57) Trennvorrichtung für Bogenkaschiermaschinen zum Separieren der bei der schuppenförmigen Bogenförderung mit einer durchgehenden Filmschicht überzogenen Bogen unter Auftrennung der Filmschicht im Überlappungsbereich, wobei eine gegenüber einer Gegegendruckwalze justierbar verstellbare rotierende Aufreißwalze mit rauher Oberfläche, deren von der Spitze der Vorsprünge aus gemessener Abstand von der Gegendruckwalze größer als die Bogendicke, aber kleiner oder gleich der doppelten Bogendicke ist.

FIG. 2

EP 0 472 943 A2

Die Erfindung bezieht sich auf eine Trennvorrichtung für Bogenkaschiermaschinen zum Separieren der bei der schuppenförmigen Bogenförderung mit einer durchgehenden Filmschicht überzogenen Bogen unter Auftrennung der Filmschicht im Überlappungsbereich.

Bei Bogenkaschiermaschinen mit der üblichen schuppenförmigen Bogenförderung ergibt sich durch die Oberflächenbeschichtung ein durchgehender Film, der im Überlappungsbereich zunächst durchtrennt werden muß, ehe die Bogen hinter der Kaschiermaschine wieder separiert werden können. Dieses Durchtrennen kann dabei bei sehr dünnen Kaschierfilmen dadurch erfolgen, daß der vorlaufende Bogen abgezogen und der nachlaufende abgebremst wird, um den Film abzureißen. Dies ist allerdings bei etwas dickeren Kaschierschichten, wie sie in der Praxis meist verwendet werden, sehr schwierig, da erhebliche Reißkräfte erforderlich sind und führt vor allem nicht zu sauberen Rißlinien. Gegebenenfalls werden dabei ganze Oberflächenpartien des Kaschierfilms, beispielsweise einer Oberflächenlackschicht, wieder abgerissen, so daß der ganze Hochglanzeffekt verlorengeht.

Um diese Schwierigkeiten zu vermeiden, sind bereits Trennvorrichtungen bekanntgeworden, bei denen mit Hilfe einer Querschneidvorrichtung der Film randseitig etwas aufgetrennt wird, um anschließend durch verkipptes Gegeneinander-Abziehen der Bogen ein Weiterreißen des Films zu veranlassen, um schließlich über die gesamte Breite den Film aufzutrennen. Auch dieses Verfahren hat sich jedoch nicht als sehr günstig erwiesen, da auch hierbei die Schwierigkeiten unsauberer Rißlinien nach wie vor gegeben sind und darüber hinaus die Kraft zum Aufreißen des Films nur graduell etwas verringert wird. Das Vorsehen von Querschneidvorrichtungen, die über die gesamte Bogenbreite den Kaschierfilm auftrennen, ist in der Praxis kaum realisierbar, da hierzu ja nicht nur das genaue Ansteuern der Überlappungskante notwendig wäre, sondern auch noch ein schräger Messerverlauf entsprechend der Fördergeschwindigkeit, um stets an der gewünschten Stelle trotz des Weiterlaufens der sich überlappenden Bogen den Schnitt anzusetzen.

Der Erfindung liegt daher die Aufgabe zugrunde, eine Trennvorrichtung für Bogenkaschiermaschinen zu schaffen, die bei einfacherem Aufbau ein sicheres Auftrennen der Filmschicht auch bei extrem hohen Fördergeschwindigkeiten sicherstellen.

Zur Lösung dieser Aufgabe ist eine derartige Trennvorrichtung erfindungsgemäß gekennzeichnet durch eine gegenüber einer Gegendruckwalze justierbar verstellbare rotierende Aufreißwalze mit rauher Oberfläche, deren von den Vorsprüngen aus gemessener Abstand von der Gegendruckwalze größer als die Bogendicke, aber kleiner oder gleich der doppelten Bogendicke ist.

In einer bautechnisch besonders einfachen Ausführungsform der erfindungsgemäßen Trennvorrichtung sind dabei die Oberflächenrauhigkeiten durch überstehende Perforiermesser gebildet, wobei ein oder ggfs. mehrere hintereinander angeordnete Perforiermesser längs einer Mantellinie der Aufreißwalze angeordnet sind, die jeweils zu den Überlappungen gesteuert werden.

Bei dieser Anordnung - etwas verringert durch die Möglichkeit drei oder mehrere Messer eng hintereinander anzuordnen, so daß ein exaktes Ansteuern einer Schnittkante bei den sich überlappenden Bogen nicht erforderlich ist - ergibt sich bei relativ einfachem Aufbau der Aufreißwalze die Schwierigkeit, möglichst genau den Umlauf der Aufreißwalze und der daran angeordneten Messer mit der Förderung der Bogen zu koordinieren. Allerdings entfällt die Schwierigkeit bisheriger Aufschneidvorrichtungen mit einem schräg verlaufenden Messer, daß sich mit der Bogenförderung mitbewegen muß.

Erheblich einfacher in der Funktion, jedoch dafür etwas schwieriger im Aufbau, ist eine zweite Ausführungsform der vorliegenden Erfindung, bei der die Aufreißwalze mit einer Vielzahl umlaufend angeordneter feiner Spitzen versehen ist.

Durch diese Ausbildung können nämlich die geschuppt ankommenden Bogen den Spalt zwischen der Gegendruckwalze und der Aufreißwalze frei passieren, ohne in Kontakt mit der Oberfläche der Aufreißwalze zu gelangen, mit Ausnahme jeweils des Überlappungsbereichs. Sobald der Überlappungsbereich in den Spalt eintritt, greifen die feinen Spitzen der Aufreißwalze zwangsläufig wegen der Spalteinstellung in die Filmschicht im Überlappungsbereich ein und reißen diese damit auf.

Der entscheidende Vorteil dieser zweiten Ausführungsform der Erfindung besteht dabei darin, daß dieses Aufreißen zuverlässig und ohne Querverfahren des Messers und auch ohne abstimmende Rotationsgeschwindigkeit einer Perforiermesserwalze mit der Fördergeschwindigkeit der Bogen und dabei auch in einer Weise erfolgt, bei der nicht zunächst der Ort der Überlappungskante irgendwie festgestellt, gemessen und über einen Rechner ausgewertet einer Schneidvorrichtung übermittelt werden muß. Dafür ist diese Ausführung insofern komplizierter, als die Herstellung einer derartigen Walze mit einer Vielzahl von möglichst ganz exakt in einer Zylinderfläche liegenden Spitzen sehr viel aufwendiger und teurer ist als die Herstellung einer Aufreißwalze mit Perforiermessern gemäß der ersten Ausführungsform der vorliegenden Erfindung.

Mit besonderem Vorteil sollen dabei Führungswalzen vor und/oder hinter der Aufreißwalze angeordnet sein, derart, daß die Bogenführung die Gegendruckwalze teilweise umschlingt.

Durch dieses teilweise Umschlingen wird zum einen ein Andrücken an die Gegendruckwalze erzielt, so daß die vorstehend beschriebene freie Passage der Bogenabschnitte außerhalb des Überlappungsbereichs besonders sicher gewährleistet ist. Gleichzeitig wird auf diese Art und Weise auch sichergestellt, daß tatsächlich nur der im Verhältnis zum Spalt zu dicke Überlappungsbereich in Kontakt mit der Aufreißwalze gelangen kann und auch nur dort der Beschichtungsfilm aufgerissen werden kann.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1    eine schematische Darstellung einer erfindungsgemäßen Trennvorrichtung und

Fig. 2    einen vergrößerten schematischen Teilschnitt durch Aufriß- und Gegendruckwalze im Augenblick des Durchlaufs eines überlappungsabschnitts zweier schuppenförmig übereinandergreifender Bogen, und

Fig. 3    einen Teilschnitt durch Aufreißwalze mit Perforiermesser und Gegendruckwalze beim Durchlauf der Überlappung zweier geschuppter Bogen und Einstich des Perforiermessers.

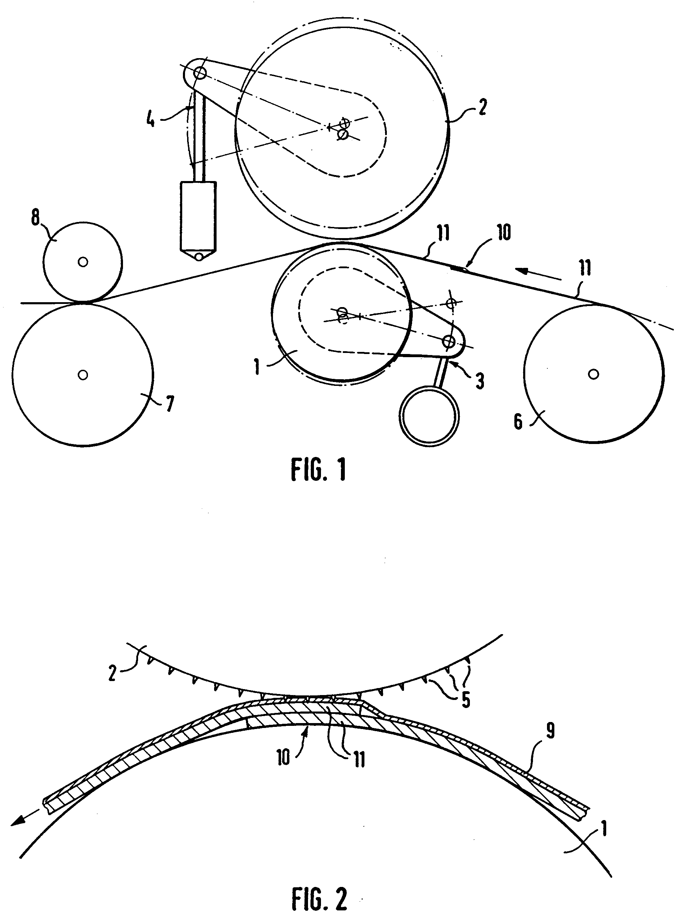

Die in Fig. 1 dargestellte Trennvorrichtung für Bogenkaschiermaschinen umfaßt eine Gegendruckwalze 1 und eine Aufreißwalze 2, die mit Hilfe von Verstelleinrichtungen 3 bzw. 4 justiert gegeneinander verstellt werden können, so daß sich ein exakt vorwählbarer Abstand zwischen der Oberfläche der glatten Gegendruckwalze und der rauhen Oberfläche der Aufreißwalze 2 ergibt, wobei diese Aufreißwalze 2 bevorzugt - wie in Fig. 2 angedeutet - mit einer Vielzahl von feinen Spitzen 5 versehen ist. Durch Führungswalzen 6, 7 und 8 werden die schuppenförmig einander übergreifenden, von einer Kaschiermaschine kommenden Bogen 11 so durch den Spalt zwischen Gegendruckwalze 1 und Aufreißwalze 2 gefördert, daß der durch eine Deckfilmschicht 9 zusammenhängende Bogenstrang die Gegendruckwalze 1 teilweise umschlingt und an diese angedrückt wird.

Der Spaltabstand zwischen Gegendruckwalze 1 und Aufreißwalze 2 ist dabei so eingestellt, daß er größer ist als die Dicke eines Bogens einschließlich der relativ dünnen aufgebrachten Filmschicht 9, beispielsweise eines Hochglanzlacks o.dgl., andererseits soll der Spaltabstand aber gleich oder etwas kleiner sein als die doppelte Dicke eines Bogens, so daß - was man insbesondere aus Fig. 2 erkennen kann - beim Passieren eines Überlappungsabschnitts 10 zweier Bogen durch den Spalt zwischen der Gegendruckwalze 1 und der Aufreißwalze 2 die rauhe Oberfläche der Gegendruckwalze 2 in den Film 9 eingreift und infolge des schnellen Rotierens dieser Gegendruckwalze den Film 9 in diesem Bereich aufreißt, so daß dann ein einfaches Separieren der Bogen möglich ist, indem jeweils der vorlaufende Bogen durch die Förderrollen beschleunigt wird.

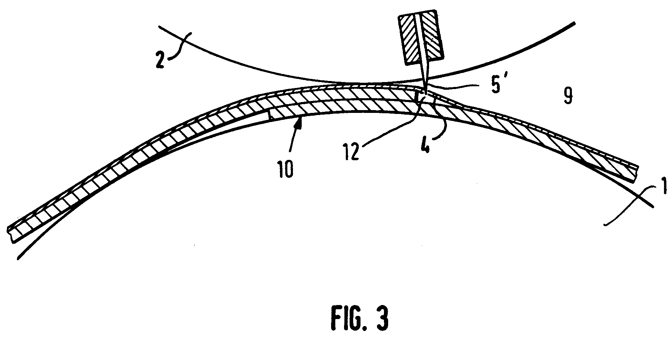

Die Figur 3 zeigt schematisch in einem etwa der Figur 2 entsprechenden Schnitt die andere Ausführungsform der vorliegenden Erfindung, bei welcher die Aufreißwalze 2 keine rund um die Walze verteilt angeordneten Spitzen 5, sondern ein Messer 5' trägt. Die Kante des Messers ist dabei in gleicher Weise von der Gegenwalze 1 beabstandet wie die Spitzen 5. Bei dieser Ausbildung bedarf es allerdings - wenn man nicht rund um die Walze in kurzen Abständen hintereinander derartige Messer 5' anordnen will - einer besonderen Steuerung des Umlaufs der Aufreißwalze gegenüber der Förderung der überlappten Bogen, damit das Messer tatsächlich im Bereich der Überlappungskante, wie sie in Fig. 3 dargestellt ist, auftrifft und den Kaschierfilm 9 durchtrennen kann.

**Patentansprüche**

1.   Trennvorrichtung für Bogenkaschiermaschinen zum Separieren der bei der schuppenförmigen Bogenförderung mit einer durchgehenden Filmschicht überzogenen Bogen unter Auftrennung der Filmschicht im Überlappungsbereich, gekennzeichnet durch eine gegenüber einer Gegendruckwalze (1) justierbar verstellbare rotierende Aufreißwalze (2) mit rauher Oberfläche, deren von der Spitze der Vorsprünge aus gemessener Abstand von der Gegendruckwalze (1) größer als die Bogendicke, aber kleiner oder gleich der doppelten Bogendicke ist.

2.   Trennvorrichtung nach Anspruch 1, dadurch gekennzeichnet, daß die Aufreißwalze (2) ein oder mehrere beabstandete Perforiermesser (5') trägt, die jeweils zu der Kante (12) der Überlappung (10) gesteuert werden.

3.   Trennvorrichtung nach Anspruch 1, dadurch gekennzeichnet, daß die Aufreißwalze (2) mit einer Vielzahl feiner Spitzen (5) versehen ist.

4.   Trennvorrichtung nach einem der Ansprüche 1 bis 3, gekennzeichnet durch Führungwalzen (6, 7, 8) vor und/oder hinter der Aufreißwalze (2), derart, daß die Bogen-Führungsbahn der Bogen (11) die Gegendruckwalze (1) teilweise umschlingt.

**FIG. 1**

**FIG. 2**

**FIG. 3**